# EUROPÄISCHE PATENTSCHRIFT

(11) **EP 2 562 034 B1**
(45) Veröffentlichungstag und Bekanntmachung des Hinweises auf die Patenterteilung: **04.10.2017**
(21) Anmeldenummer: 12174083.1
(22) Anmeldetag: 28.06.2012
(51) Int. Cl.: B60N 2/68, B60N 2/427, C21D 8/00, C21D 1/673

(54) **Profilbauteil für einen Fahrzeugsitz, Verfahren und Vorrichtung zur Herstellung eines Profilbauteils**
Profile component for a vehicle seat, method and device for producing a profile component
Composant profilé d'un siège de véhicule, procédé et dispositif destinés à la fabrication d'un composant profilé

(30) Priorität: 25.08.2011 DE 102011111167
(43) Veröffentlichungstag der Anmeldung: 27.02.2013
(73) Patentinhaber: Adient Luxembourg Holding S.à r.l., 2453 Luxembourg (LU)
(72) Erfinder: Geisler, Axel, 51399 Burscheid (DE)
(74) Vertreter: Liedtke, Markus

(56) Entgegenhaltungen:
- EP-A1- 1 234 891
- WO-A1-2011/056923
- DE-A1-102006 018 406
- DE-B3-102005 032 113
- DE-B3-102006 019 567
- DE-T2- 60 205 744
- DE-T2- 69 920 189
- US-A- 3 501 200

## Beschreibung

Die Erfindung betrifft ein Profilbauteil für einen Fahrzeugsitz. Weiterhin betrifft die Erfindung ein Verfahren und eine Vorrichtung zur Herstellung eines Profilbauteils für einen Fahrzeugsitz gemäß dem Oberbegriff des Anspruchs 5 bzw. 10.

Um Profilbauteile herzustellen, welche in mehreren Bereichen unterschiedlichen Beanspruchungen standhalten, besteht beispielsweise die Möglichkeit, Einzelbauteile mit den entsprechenden unterschiedlichen Eigenschaften zusammenzufügen. Ferner können Profilbauteile durch Zusatzbauteile lokal verstärkt werden. Weiterhin können vollständig gehärtete Profilbauteile mittels Weichglühens an den entsprechenden Stellen behandelt werden, um Bereiche mit höherer Duktilität auszubilden. Dieser Vorgang führt jedoch zu nicht tolerierbaren Formveränderungen, insbesondere einem Verzug, im Profilbauteil.

Weiterhin sind zusammengesetzte Profilbauteile bekannt, welche aus zumindest zwei mittels eines Pressverfahrens hergestellten und stoffschlüssig verbundenen Einzelteilen gebildet sind.

Die DE 10 2005 032 113 B3 beschreibt eine Vorrichtung und ein Verfahren zum Warmumformen und partiellen Härten eines Bauteils zwischen zwei Werkzeughälften in einer Presse. Die Werkzeughälften sind jeweils in wenigstens zwei Segmente unterteilt, die durch eine Wärmeisolierung voneinander getrennt sind. Die beiden Segmente können durch eine Temperaturregelung beheizt oder gekühlt werden, so dass in verschiedenen Bereichen des Bauteils unterschiedliche Temperaturen und damit Abkühlkurven einstellbar sind. Dadurch lässt sich ein Bauteil mit Bereichen unterschiedlicher Festigkeit und Duktilität herstellen. Profilbauteile unterschiedlicher Festigkeit sind beispielsweise aus der WO2011/056923 A1 und der DE 699 20 189 T2 bekannt.

### Aufgabe

Aufgabe der vorliegenden Erfindung ist es, ein gegenüber dem Stand der Technik verbessertes Profilbauteil für einen Fahrzeugsitz, sowie ein verbessertes Verfahren und eine verbesserte Vorrichtung zur Herstellung eines Profilbauteils für einen Fahrzeugsitz anzugeben.

### Lösung

Hinsichtlich des Profilbauteils für einen Fahrzeugsitz wird die Aufgabe durch die im Anspruch 1 angegebenen Merkmale gelöst.

Hinsichtlich des Verfahrens zur Herstellung eines Profilbauteils für einen Fahrzeugsitz wird die Aufgabe durch die im Anspruch 5 angegebenen Merkmale gelöst.

Hinsichtlich der Vorrichtung zur Herstellung eines Profilbauteils für einen Fahrzeugsitz wird die Aufgabe durch die im Anspruch 10 angegebenen Merkmale gelöst.

Vorteilhafte Weiterbildungen der Erfindung sind Gegenstand der Unteransprüche.

Im Profilbauteil für einen Fahrzeugsitz ist erfindungsgemäß in einem zentralen Bereich des Profilbauteils ein getemperter Bauteilabschnitt angeordnet, wobei endseitig des Profilbauteils jeweils ein ungetemperter Bauteilabschnitt angeordnet ist und zwischen benachbarten Bauteilabschnitten jeweils ein Übergangsbereich ausgebildet ist. Dadurch ist es möglich, ein einstückiges Profilbauteil mit lokal unterschiedlichen Eigenschaften ohne Verwendung, insbesondere nachträglicher Anordnung, zusätzlicher Strukturkomponenten und/oder dem Fügen verschiedenartiger Blechsegmente zu einem Profilbauteil bereitzustellen.

Zweckmäßigerweise ist der Werkstoff des Profilbauteils ein Metall oder eine metallische Legierung, welche mittels Tempern veränderbare Werkstoffeigenschaften aufweist. Beim Tempern wird ein Material auf eine Temperatur unterhalb seiner Schmelztemperatur erhitzt. Dies geschieht über einen längeren, vorgebbaren Zeitraum hinweg, welcher beispielsweise einige Minuten bis hin zu einigen Tagen dauern kann. Durch die mittels der Erwärmung bewirkte erhöhte Beweglichkeit der Atome können beispielsweise Strukturdefekte des Werkstoffs ausgeglichen und eine entsprechende Kristallstruktur in der Nah- und Fernordnung verbessert werden. Auf diese Weise kann der Prozess des energieaufwändigen Schmelzens und des langsamen Abkühlens zur Einstellung der Kristallstruktur vermieden werden.

Vorteilhafterweise ist eine mittels des Temperns veränderbare Werkstoffeigenschaft eine Duktilität des Werkstoffs des Profilbauteils. Auf diese Weise können im Profilbauteil Bauteilabschnitte ausgebildet werden, welche sich im Falle eines Unfalls plastisch verformen und nicht auseinanderreißen. Dadurch ist ein Verletzungsrisiko der Fahrzeuginsassen verringert und eine Sicherheit der Fahrzeuginsassen gesteigert.

Insbesondere ist eine gezielte Erhöhung von Verformungsreserven in entsprechenden Abschnitten des Profilbauteils ermöglicht.

Eine weitere mittels des Temperns veränderbare Werkstoffeigenschaft ist eine Festigkeit des Werkstoffs des Profilbauteils. So kann bei der Verwendung geeigneter, herkömmlicher Stähle die lokale Festigkeit des Profilbauteils mittels des Temperns von 500 MPa auf 1500 MPa gesteigert werden.

Auf diese Weise können im Profilbauteil in Abhängigkeit der im Betrieb des Fahrzeugsitzes auftretenden Lastfälle besonders steife und besonders duktile Bauteilabschnitte ausgebildet werden.

Mittels des Profilbauteils sind eine Gewichtsreduzierung und/oder eine Festigkeitserhöhung des daraus gebildeten Fahrzeugsitzes bewirkt.

Um einen sicheren Fügeprozess der aneinander angeordneten Profilbauteile eines Fahrzeugsitzes zu ermöglichen, werden die entsprechenden Fügebereiche des Profilbauteils nicht getempert.

Vorteilhafterweise ist eine Breite des Übergangsbereichs zwischen benachbarten Bauteilabschnitten mit unterschiedlichen Werkstoffeigenschaften vorgebbar, beispielsweise kleiner oder gleich 50 mm. Dabei wirkt sich ein weicher, d.h. allmählicher Festigkeitsübergang positiv auf ein Crashverhalten des Profilelements aus.

Beim Verfahren zur Herstellung eines Profilbauteils für einen Fahrzeugsitz werden im Profilbauteil mittels zumindest eines zumindest abschnittsweise auf das Profilbauteil einwirkenden Tempervorgangs erfindungsgemäß Bauteilabschnitte mit lokal unterschiedlichen Werkstoffeigenschaften unter Ausbildung eines Übergangsbereichs zwischen benachbarten Bauteilabschnitten mit unterschiedlichen Werkstoffeigenschaften ausgebildet.

Dabei werden bevorzugt eine Temperatur, eine Aufheizkurve, eine Abkühlrate und eine Dauer des jeweiligen Tempervorgangs in Abhängigkeit der im betreffenden Bauteilabschnitt auszubildenden Werkstoffeigenschaften eingestellt.

Besonders bevorzugt wird eine Abkühlrate oberhalb von 30 Kelvin in der Sekunde eingestellt.

Auf diese Weise können im Profilbauteil in Abhängigkeit der im Betrieb des Fahrzeugsitzes auftretenden Lastfälle besonders steife und besonders duktile Bauteilabschnitte ausgebildet werden.

Dabei können die steifen und duktilen Bauteilabschnitte entlang einer Längsausdehnung des Profilbauteils variieren. Durch diese variierbare Anordnung ist das Profilbauteil vorteilhafterweise an die während des Betriebes aufzunehmenden Kräfte und Belastungen anpassbar. Insbesondere ist hierbei der Verlauf der Anordnung der steifen und duktilen Bauteilabschnitte entlang der Längsausdehnung des Profilbauteils entsprechend auftretender relevanter Lastfälle für einen Fahrzeugsitz so optimiert und gewählt, dass eine besonders hohe Steifigkeit des erfindungsgemäßen Profilbauteils in einer Großserienproduktion erzielbar ist.

Daraus resultiert eine im Vergleich zum Stand der Technik verbesserte Biege- und Torsionssteifigkeit des Profilbauteils. Somit ist ein mit dem erfindungsgemäßen Profilbauteil ausgeformter Fahrzeugsitz im Vergleich zum Stand der Technik belastbarer und gegenüber einer Biegebeanspruchung und/oder einer Torsion widerstandsfähiger.

Das erfindungsgemäße Profilbauteil ermöglicht somit eine kostengünstige Herstellung des Fahrzeugsitzes.

Weiterhin ist ein Gewicht dieses Fahrzeugsitzes verringert, woraus ein reduziertes Fahrzeuggewicht und ein verringerter Treibstoffverbrauch und Schadstoffausstoß resultieren.

Vorteilhafterweise wird der zumindest eine Tempervorgang in einem Umformwerkzeug während und/oder nach einer Umformung eines Blechabschnitts oder eines Halbzeugs zum Profilbauteil durchgeführt. Dies ermöglicht eine signifikante Erhöhung der Bauteilkomplexität gegenüber einer herkömmlichen Kaltumformung bei gleichzeitig erhöhter Materialfestigkeit.

Besonders vorteilhafterweise wird mittels des Tempervorgangs eine Gefügeveränderung des Werkstoffs im betreffenden Bauteilabschnitt bei einem im Vergleich zum herkömmlichen Aufschmelzen des Materials signifikant verringertem Energieeinsatz bewirkt.

Bei der Vorrichtung zur Herstellung eines Profilbauteils sind in einem Umformwerkzeug zur Herstellung des Profilbauteils aus einem Blechabschnitt oder einem Halbzeug unterschiedlich temperierbare Werkzeugabschnitte ausgebildet, welche auf unterschiedliche Bauteilabschnitte einwirken. Dadurch sind am Blechabschnitt oder am Halbzeug während des Pressvorgangs zur Umformung zum Profilbauteil unterschiedliche Temperaturen in entsprechenden Bauteilabschnitten einstellbar.

### Beschreibung

Anhand der beigefügten schematischen Figuren wird die Erfindung näher erläutert.

Dabei zeigen:
- Figur 1: schematisch eine perspektivische Darstellung eines erfindungsgemäßen Profilbauteils für eine Sitzflächenstruktur eines Fahrzeugsitzes und
- Figur 2: schematisch eine perspektivische Darstellung eines mittels erfindungsgemäßer Profilbauteile gebildeten Lehnenrahmen einer Rückenlehne für einen Fahrzeugsitz.

Einander entsprechende Teile sind in allen Figuren mit den gleichen Bezugszeichen versehen.

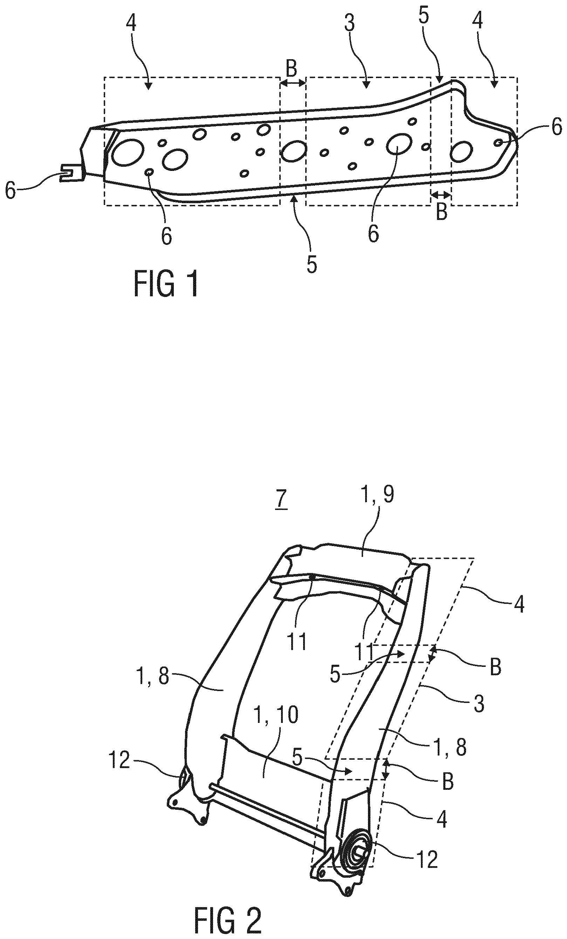

Figur 1 zeigt schematisch eine perspektivische Darstellung eines erfindungsgemäßen Profilbauteils 1 für eine nicht näher dargestellte Sitzflächenstruktur eines Fahrzeugsitzes. Dabei ist das in Figur 1 abgebildete Profilbauteil 1 als seitliches Rahmenelement 2 der Sitzflächenstruktur des Fahrzeugsitzes ausgebildet.

Das Profilbauteil 1 ist aus einem Werkstoff gefertigt, welcher mittels Tempern veränderbare Werkstoffeigenschaften aufweist. Beispielsweise ist das Profilbauteil 1 aus einem Metall oder einer metallische Legierung gebildet.

Das Profilbauteil 1 wird aus einem herkömmlichen Blechabschnitt oder einem Halbzeug umgeformt, wobei beim Verfahren zur Herstellung des Profilbauteils 1 im Profilbauteil 1 mittels zumindest eines zumindest abschnittsweise auf das Profilbauteil 1 einwirkenden Tempervorgangs Bauteilabschnitte 3, 4 mit lokal unterschiedlichen Werkstoffeigenschaften unter Ausbildung eines Übergangsbereichs 5 zwischen benachbarten Bauteilabschnitten 3, 4 mit unterschiedlichen Werkstoffeigenschaften ausgebildet werden.

Beim Tempern wird ein Material auf eine Temperatur unterhalb seiner Schmelztemperatur erhitzt. Dies geschieht über einen längeren, vorgebbaren Zeitraum hinweg, welcher beispielsweise einige Minuten bis hin zu einigen Tagen dauern kann. Durch die mittels der Erwärmung bewirkte erhöhte Beweglichkeit der Atome können beispielsweise Strukturdefekte des Werkstoffs ausgeglichen und eine entsprechende Kristallstruktur in der Nah- und Fernordnung verbessert werden. Auf diese Weise kann der Prozess des energieaufwändigen Schmelzens und des langsamen Abkühlens zur Einstellung der Kristallstruktur vermieden werden.

Dabei wird zur Durchführung der Verfahrens eine nicht dargestellte Vorrichtung verwendet, bei welcher in einem Umformwerkzeug zur Herstellung des Profilbauteils aus einem Blechabschnitt oder einem Halbzeug unterschiedlich temperierbare Werkzeugabschnitte ausgebildet sind, welche auf unterschiedliche Bauteilabschnitte 3, 4 des Profilbauteils 1 einwirken. Dadurch sind am Blechabschnitt oder am Halbzeug während des Pressvorgangs zur Umformung zum Profilbauteil 1 unterschiedliche Temperaturen in entsprechenden Bauteilabschnitten 3, 4 einstellbar.

Dabei werden bevorzugt eine Temperatur, eine Aufheizkurve, eine Abkühlrate und eine Dauer des jeweiligen Tempervorgangs in Abhängigkeit der im betreffenden Bauteilabschnitt 3, 4 auszubildenden Werkstoffeigenschaften eingestellt.

Besonders bevorzugt wird eine Abkühlrate oberhalb von 30 Kelvin in der Sekunde eingestellt.

Vorteilhafterweise ist eine mittels des Temperns veränderbare Werkstoffeigenschaft eine Duktilität des Werkstoffs des Profilbauteils 1.

Eine weitere mittels des Temperns veränderbare Werkstoffeigenschaft ist eine Festigkeit des Werkstoffs des Profilbauteils 1. So kann bei der Verwendung geeigneter, herkömmlicher Stähle die lokale Festigkeit des Profilbauteils mittels des Temperns von 500 MPa auf 1500 MPa gesteigert werden.

Auf diese Weise können im Profilbauteil 1, in Abhängigkeit der im Betrieb des Fahrzeugsitzes auftretenden Lastfälle besonders steife und/oder besonders duktile getemperte Bauteilabschnitte 3 ausgebildet werden.

Um einen sicheren Fügeprozess der aneinander angeordneten Profilbauteile 1 eines Fahrzeugsitzes zu ermöglichen, werden Bauteilabschnitte 4 mit den entsprechenden Fügebereichen des Profilbauteils 1 nicht getempert.

Dabei sind die ungetemperten Bauteilabschnitte 4 insbesondere endseitig am Profilbauteil 1 ausgebildet, wobei der getemperte Bauteilabschnitt 3 in einem zentralen Bereich des Profilbauteils 1 ausgebildet ist und derart von den ungetemperten Bauteilabschnitten 4 flankiert wird.

Dabei können die steifen und/oder duktilen getemperten Bauteilabschnitte 3 sowie die ungetemperten Bauteilabschnitte 4 entlang einer Längsausdehnung des Profilbauteils 1 abwechselnd angeordnet sein. Durch diese variierbare Anordnung der Bauteilabschnitte 3, 4 ist das Profilbauteil 1 vorteilhafterweise an die während des Betriebes aufzunehmenden Kräfte und Belastungen anpassbar. Insbesondere ist hierbei der Verlauf der Anordnung der steifen und duktilen getemperten Bauteilabschnitte 3 sowie der ungetemperten Bauteilabschnitte 4 entlang der Längsausdehnung des Profilbauteils 1 entsprechend auftretender relevanter Lastfälle für einen Fahrzeugsitz so optimiert und gewählt, dass eine besonders hohe Steifigkeit des erfindungsgemäßen Profilbauteils 1 in einer Großserienproduktion erzielbar ist.

Vorteilhafterweise wird der zumindest eine Tempervorgang in einem Umformwerkzeug während und/oder nach einer Umformung des Blechabschnitts oder des Halbzeugs zum Profilbauteil 1 durchgeführt. Dies ermöglicht eine signifikante Erhöhung der Bauteilkomplexität des Profilbauteils 1 gegenüber einer herkömmlichen Kaltumformung bei gleichzeitig erhöhter Materialfestigkeit.

Besonders vorteilhafterweise wird mittels des Tempervorgangs eine Gefügeveränderung des Werkstoffs im betreffenden Bauteilabschnitt 3, 4 bei einem im Vergleich zum herkömmlichen Aufschmelzen des Materials signifikant verringertem Energieeinsatz bewirkt.

Somit sind im Profilbauteil 1 mittels des zumindest einen Tempervorgangs Bauteilabschnitte 3, 4 mit lokal unterschiedlichen Werkstoffeigenschaften unter Ausbildung des Übergangsbereichs 5 zwischen den benachbarten Bauteilabschnitten 3 ,4 mit unterschiedlichen Werkstoffeigenschaften ausgebildet.

Dabei ist eine Breite B des Übergangsbereichs 5 zwischen den benachbarten Bauteilabschnitten 3, 4 mit unterschiedlichen Werkstoffeigenschaften vorgebbar, beispielsweise kleiner oder gleich 50 mm. Dabei wirkt sich ein weicher, d.h. allmählicher Festigkeitsübergang positiv auf ein Crashverhalten des Profilelements 1 aus.

Dadurch ist es mittels des erfindungsgemäßen Verfahrens möglich, ein einstückiges Profilbauteil 1 mit lokal unterschiedlichen Eigenschaften ohne Verwendung, insbesondere nachträglicher Anordnung, zusätzlicher Strukturkomponenten und/oder dem Fügen verschiedenartiger Blechsegmente zu einem Profilbauteil 1 bereitzustellen.

In oder an dem Profilbauteil 1 sind eine Mehrzahl von Anschluss- oder Aufnahmeelementen 6 ausgeformt. Diese Anschluss- oder Aufnahmeelemente 6 können beispielweise als herkömmliche Bohrungen oder Aussparungen ausgeformt sein und der Aufnahme von Drehachsen zur Neigungseinstellung eines Lehnenrahmens 7, zur Befestigung eines Gurtschlosses, eines Bedienelementes oder der Sitzpolsterung und/oder zur Kopfstützenaufnahme dienen.

Das erfindungsgemäße Profilbauteil 1 weist vorteilhafterweise eine im Vergleich zum Stand der Technik signifikant vergrößerte Biege- und Torsionssteifigkeit auf. Ist diese vergrößerte Biege- und Torsionssteifigkeit nicht erforderlich oder gewünscht, kann die Materialstärke und somit das Gewicht des Profilbauteils 1 bei gleichbleibender Biege- und Torsionssteifigkeit verringert werden.

Figur 2 zeigt schematisch eine perspektivische Darstellung eines mittels erfindungsgemäßer Profilbauteile 1 gebildeten Lehnenrahmens 7 einer Rückenlehne für einen Fahrzeugsitz.

Dabei sind zwei der Profilbauteile 1 als Seitenelemente 8 des Lehnenrahmens 7 ausgebildet. Die beiden Seitenelemente 8 sind mittels eines als unterer Querträger 9 ausgebildeten Profilbauteils 1 und eines als oberer Querträger 10 ausgebildeten Profilbauteils 1 miteinander gekoppelt und bilden somit den Lehnenrahmen 7.

Am oberen Querträger 10 sind zwei herkömmliche Kopfstützenaufnahmen 11 angeordnet.

Im unteren Bereich des Lehnenrahmens 7 sind beidseitig herkömmliche Koppelelemente 12 angeordnet, welche eine schwenkbare Verbindung des Lehnenrahmens 7 mit einem nicht dargestellten Sitzrahmen zur Bildung eines Fahrzeugsitzes ermöglichen.

### Bezugszeichenliste

- 1: Profilbauteil
- 2: Rahmenelement
- 3: getempert Bauteilabschnitt
- 4: ungetempert Bauteilabschnitt
- 5: Übergangsbereich
- 6: Anschluss- oder Aufnahmeelement
- 7: Lehnenrahmen
- 8: Seitenelement
- 9: unterer Querträger
- 10: oberer Querträger
- 11: Kopfstützenaufnahme
- 12: Koppelelement
- B: Breite

## Patentansprüche

1. Profilbauteil (1) für einen Fahrzeugsitz,
**dadurch gekennzeichnet, dass** in einem zentralen Bereich des Profilbauteils (1) ein getemperter Bauteilabschnitt (3) angeordnet ist, wobei endseitig des Profilbauteils (1) jeweils ein ungetemperter Bauteilabschnitt (4) angeordnet ist und zwischen benachbarten Bauteilabschnitten (3, 4) jeweils ein Übergangsbereich (5) ausgebildet ist.

2. Profilbauteil (1) nach Anspruch 1,
**dadurch gekennzeichnet, dass** der Werkstoff des Profilbauteils (1) ein Metall oder eine metallische Legierung ist, welche mittels Tempern einstellbare Werkstoffeigenschaften aufweist, so dass der getemperte Bauteilabschnitt (3) und die ungetemperten Bauteilabschnitte (4) unterschiedliche Werkstoffeigenschaften aufweisen.

3. Profilbauteil (1) nach Anspruch 2,
**dadurch gekennzeichnet, dass** der getemperte Bauteilabschnitt (3) eine Festigkeit von 500 bis 1500 Mpa aufweist.

4. Profilbauteil (1) nach einem der vorherigen Ansprüche,
**dadurch gekennzeichnet, dass** eine Breite (B) des Übergangsbereichs (5) zwischen benachbarten Bauteilabschnitten (3, 4) mit unterschiedlichen Werkstoffeigenschaften vorgebbar ist.

5. Verfahren zur Herstellung eines Profilbauteils (1) für einen Fahrzeugsitz nach einem der vorherigen Ansprüche,
**dadurch gekennzeichnet, dass** im Profilbauteil (1) Bauteilabschnitte (3, 4) mit lokal unterschiedlichen Werkstoffeigenschaften unter Ausbildung eines Übergangsbereichs (5) zwischen benachbarten Bauteilabschnitten (3, 4) mit unterschiedlichen Werkstoffeigenschaften mittels zumindest eines zumindest abschnittsweise auf das Profilbauteil (1) einwirkenden Tempervorgangs ausgebildet werden.

6. Verfahren nach Anspruch 5,
**dadurch gekennzeichnet, dass** eine Temperatur, eine Aufheizkurve, eine Abkühlrate und/oder eine Dauer des jeweiligen Tempervorgangs in Abhängigkeit der im betreffenden Bauteilabschnitt (3, 4) auszubildenden Werkstoffeigenschaften eingestellt wird.

7. Verfahren nach Anspruch 6,
**dadurch gekennzeichnet, dass** eine Abkühlrate oberhalb von 30 Kelvin in der Sekunde eingestellt wird.

8. Verfahren nach Anspruch 5, 6 oder 7,
**dadurch gekennzeichnet, dass** der zumindest eine Tempervorgang in einem Umformwerkzeug während und/oder nach einer Umformung eines Blechabschnitts oder eines Halbzeugs zum Profilbauteil (1) durchgeführt wird.

9. Verfahren nach einem der vorherigen Ansprüche,
**dadurch gekennzeichnet, dass** mittels des Tempervorgangs eine Gefügeveränderung des Werkstoffs im betreffenden Bauteilabschnitt (3, 4) bewirkt wird.

10. Vorrichtung zur Herstellung eines Profilbauteils (1) für einen Fahrzeugsitz nach einem der Ansprüche 1 bis 5,
**dadurch gekennzeichnet, dass** in einem Umformwerkzeug zur Herstellung des Profilbauteils (1) aus einem Blechabschnitt oder einem Halbzeug unterschiedlich temperierbare Werkzeugabschnitte ausgebildet sind, welche auf unterschiedliche Bauteilabschnitte (3, 4) einwirken.

## Claims

1. Profile component (1) for a vehicle seat,
**characterized in that** an annealed component section (3) is arranged in a central region of the profile component (1), wherein in each case one non-annealed component section (4) is arranged at the end sides of the profile component (1), and in each case one transition region (5) is formed between adjacent component sections (3, 4).

2. Profile component (1) according to Claim 1,
**characterized in that** the material of the profile component (1) is a metal or a metallic alloy which has material characteristics which are settable by means of annealing, such that the annealed component section (3) and the non-annealed component sections (4) have different material characteristics.

3. Profile component (1) according to Claim 2,
**characterized in that** the annealed component section (3) has a strength of 500 to 1500 MPa.

4. Profile component (1) according to one of the preceding claims,
**characterized in that** a width (B) of the transition region (5) between adjacent component sections (3, 4) is predefinable with different material characteristics.

5. Method for producing a profile component (1) for a vehicle seat according to one of the preceding claims,
**characterized in that**, in the profile component (1), component sections (3, 4) with locally different material characteristics are formed, with a transition region (5) being formed between adjacent component sections (3, 4) with different material characteristics by means of at least one annealing process to which the profile component (1) is subjected at least in sections.

6. Method according to Claim 5,
**characterized in that** a temperature, a heating curve, a cooling rate and/or a duration of the respective annealing process is set in a manner dependent on the material characteristics to be formed in the respective component section (3, 4).

7. Method according to Claim 6,
**characterized in that** a cooling rate higher than 30 Kelvin per second is set.

8. Method according to Claim 5, 6 or 7,
**characterized in that** the at least one annealing process is performed in a deformation tool during and/or after a deformation of a sheet-metal section or of a semifinished part to form the profile component (1) .

9. Method according to one of the preceding claims, **characterized in that** a structural change of the material in the respective component section (3, 4) is effected by means of the annealing process.

10. Device for producing a profile component (1) for a vehicle seat according to one of Claims 1 to 5,
**characterized in that**, in a deformation tool for producing the profile component (1) from a sheet-metal section or a semifinished part, there are formed differently temperature-controllable tool sections which act on different component sections (3, 4).

## Revendications

1. Composant profilé (1) pour un siège de véhicule, **caractérisé en ce qu'**une partie de composant recuite (3) est disposée dans une région centrale du composant profilé (1), dans lequel une partie de composant non recuite (4) est disposée respectivement vers les extrémités du composant profilé (1) et une région de transition (5) est formée respectivement entre des parties de composant voisines (3, 4).

2. Composant profilé (1) selon la revendication 1, **caractérisé en ce que** le matériau du composant profilé (1) est un métal ou un alliage métallique, qui présente des propriétés de matériau réglables au moyen d'un recuit, de telle manière que la partie de composant recuite (3) et les parties de composant non recuites (4) présentent des propriétés de matériau différentes.

3. Composant profilé (1) selon la revendication 2, **caractérisé en ce que** la partie de composant recuite (3) présente une résistance de 500 à 1500 MPa.

4. Composant profilé (1) selon l'une quelconque des revendications précédentes, **caractérisé en ce qu'**une largeur (B) de la région de transition (5) entre des parties de composant voisines (3, 4) avec des propriétés de matériau différentes peut être prédéterminée.

5. Procédé destiné à la fabrication d'un composant profilé (1) pour un siège de véhicule selon l'une quelconque des revendications précédentes, **caractérisé en ce que** l'on forme dans le composant profilé (1) des parties de composant (3, 4) avec des propriétés de matériau localement différentes avec formation d'une région de transition (5) entre des parties de composant voisines (3, 4) avec des propriétés de matériau différentes au moyen d'au moins une opération de recuit agissant au moins localement sur le composant profilé (1).

6. Procédé selon la revendication 5, **caractérisé en ce que** l'on règle une température, une courbe de chauffage, une vitesse de refroidissement et/ou une durée de l'opération de recuit respective en fonction des propriétés de matériau à obtenir dans la partie de composant concernée (3, 4).

7. Procédé selon la revendication 6, **caractérisé en ce que** l'on règle une vitesse de refroidissement supérieure à 30 Kelvin par seconde.

8. Procédé selon la revendication 5, 6 ou 7, **caractérisé en ce que** l'on exécute ladite au moins une opération de recuit dans un outil de formage pendant et/ou après un formage d'une pièce de tôle ou d'une ébauche en un composant profilé (1).

9. Procédé selon l'une quelconque des revendications précédentes, **caractérisé en ce que** l'on provoque un changement de structure du matériau dans la partie de composant concernée (3, 4) au moyen de l'opération de recuit.

10. Dispositif destiné à la fabrication d'un composant profilé (1) pour un siège de véhicule selon l'une quelconque des revendications 1 à 5, **caractérisé en ce que** des parties d'outil pouvant être recuites différemment sont formées dans un outil de formage destiné à la fabrication du composant profilé (1) à partir d'une pièce de tôle ou d'une ébauche, et qui agissent sur des parties de composant différentes (3, 4).
